# EUROPÄISCHE PATENTANMELDUNG

(11) **EP 1 475 563 A1**
(43) Veröffentlichungstag der Anmeldung: **10.11.2004**
(21) Anmeldenummer: 04010861.5
(22) Anmeldetag: 07.05.2004
(51) Int. Cl.: F16P 1/02, F16D 3/84, A01B 71/08

(54) **Zapfwellenschutz**

(30) Priorität: 09.05.2003 DE 10320998
(71) Anmelder: Zunhammer, Sebastian, 83301 Traunreut (DE)
(72) Erfinder: Zunhammer, Sebastian, 83301 Traunreut (DE)

(57) **Zusammenfassung**

Die Erfindung bezieht sich auf eine Schutzvorrichtung für frei zugängliche Wellenenden, insbesondere Schutzvorrichtung für mehrere, wahlweise anschließbare Zapfwellen (2, 3) eines Getriebes (1), bei der die Schutzvorrichtung (4) durch ein topfförmiges Gehäuse (8) gebildet wird, welches die freien Enden der Zapfwellen (2, 3) seitlich umschließt, und das mit seinem Boden (5) am Gehäuse (6) des Getriebes (1) montiert ist, wobei in einer den Enden der Zapfwellen (2, 3) vorgelagerten Ebene eine zwischen zwei Endstellungen schwenkbare Klappe (14) im Gehäuse (8) der Schutzvorrichtung (4) derart gelagert ist, dass jeweils in einer Endstellung der Klappe (14) nur das Ende einer Zapfwelle (2 oder 3) freigegeben ist.

## Beschreibung

Die vorliegende Erfindung bezieht sich auf eine Schutzvorrichtung für frei zugängliche Wellenenden, insbesondere auf eine Schutzvorrichtung für Zapfwellen.

Die DE 38 38 803 C2 zeigt eine derartige Schutzabdeckung zum Verhindern der Berührung mindestens eines frei endenden, sich drehenden Teils, insbesondere Schutzschild zum Abdecken der Zapfwelle eines Ackerschleppers, mit einem U-förmig ausgebildeten Gehäuseteil, dessen Basisschenkel und freie Schenkel in einer ersten Schutzstellung im wesentlichen parallel zum drehenden Teil ausgerichtet sind und das drehende Teil von oben und von beiden Seiten abdecken, und mit einer senkrecht zum drehenden Teil verlaufenden horizontalen Achse, um die das U-förmige Gehäuseteil in eine zweite Schutzstellung verschwenkbar ist.

Als frei endendes, sich drehendes Teil kommt in jener Druckschrift insbesondere eine Zapfwelle in Betracht. Diese ist das Endstück einer Antriebswelle, beispielsweise einer landwirtschaftlichen Zugmaschine zur Übertragung der Bewegung auf ein Arbeitsgerät. Die Zapfwelle ragt gewöhnlich frei aus dem Getriebegehäuse hinaus. Um Unfälle zu vermeiden, muss die Zapfwelle entsprechend den Sicherheitsvorschriften durch ein an der Antriebseinheit, beispielsweise der Zugmaschine, befestigtes Schutzgehäuse geschützt sein. Die erforderlichen Abmessungen des Schutzgehäuses sind durch die Sicherheitsvorschriften festgelegt. Bei Zugmaschinen muss die Zapfwelle zumindest oben und an ihren beiden Seiten verdeckt sein.

Durch die DE 34 02 065 C1 ist eine Schutzabdeckung der eingangs genannten Art bekannt geworden, bei der zur Erleichterung der Montage von Arbeitsgeräten mit Zapfwellenantrieb ein Schutzschild schnell und ohne den Einsatz von Werkzeugen nach oben aufgeklappt werden kann. Das Schutzschild ist dabei U-förmig ausgebildet und deckt die Zapfwelle von oben und seitlich ab. Die Schenkel (Seitenteile) des U-förmigen Schutz-Schildes sind in einem horizontalen Schwenklager, das quer zur Zapfwelle verläuft, gelagert. Um dieses Lager lässt sich das Schutzschild verschwenken. Die Schutzeinrichtung kann eine erste Schutzstellung einnehmen, in der ein ungehinderter Betrieb der Zapfwalle mit einer aufgesteckten Gelenkwelle möglich ist. Sie kann ferner in eine weitere Schutzstellung gebracht werden, in der die Vorderkante des oberen Abdeckteils leicht nach unten, in Richtung der Zapfwelle verkippt ist, um eine bessere Zugänglichkeit eines darüber liegenden Zugmauls zu ermöglichen. In der zweiten Schutzstellung kann gegebenenfalls noch eine Gelenkwelle mit einer kleinen Gelenkwellenkupplung angeschlossen sein.

Aus der US 3 641 840 ist eine vollständig die Zapfwelle bedeckende Schutzkappe bekannt und beschrieben, welche die hervorstehende Zapfwelle abdeckt, wenn die Zapfwelle nicht benutzt wird. Die Schutzkappe ist bei Benutzung bzw. Nichtbenutzung einer Arbeitsmaschine jeweils ab- bzw. anzubauen. Es muss an geeigneter Stelle in der Nähe der Zapfwelle eine Aufbewahreinrichtung für die Schutzkappe geschaffen werden. Hierbei ist der Gefahr des Verlustes der Schutzkappe Rechnung zu tragen.

Wenn mehrere Zapfwellenenden aus dem Getriebe der Arbeitsmaschine herausragen, muss der Schutz mehrfach vorgesehen werden, was die Verlustmöglichkeit noch erhöht.

Der Erfindung liegt die Aufgabe zu Grunde, einen Zapfwellenschutz, insbesondere für mehrere Zapfwellenenden zu schaffen, der einfach herstellbar, einfach montierbar, unverlierbar und leicht zu handhaben ist.

Diese Aufgabe wird durch eine Vorrichtung mit den Merkmalen des Anspruchs 1 gelöst. Durch Vorrichtungen gemäß den Merkmalen der abhängigen Ansprüche wird die Schutzvorrichtung noch weiter ausgestaltet.

Besonders vorteilhaft ist eine Schutzvorrichtung für frei zugängliche Wellenenden, insbesondere für mehrere, wahlweise anschließbare Zapfwellen eines Getriebes, wenn die Schutzvorrichtung durch ein topfförmiges Gehäuse gebildet wird, welches die freien Enden der Zapfwellen seitlich umschließt, und das mit seinem Boden am Gehäuse des Getriebes montiert ist, wobei in einer - den Enden der Zapfwellen vorgelagerten - Ebene eine zwischen zwei Endstellungen schwenkbare Klappe im Gehäuse der Schutzvorrichtung derart gelagert ist, dass jeweils in einer Endstellung der Klappe nur das Ende einer Zapfwelle freigegeben ist.

Ferner ist eine Schutzvorrichtung vorteilhaft, wenn das topfförmige Gehäuse durch zwei parallel zueinander verlaufende Wandungselemente gebildet wird, die durch zwei Halbkreise miteinander verbunden sind, wodurch ein im wesentlichen ovaler Querschnitt des Gehäuses gebildet wird.

Eine erfindungsgemäße Schutzvorrichtung ist dann besonders vorteilhaft, wenn die Klappe zwei bolzenartige Ansätze aufweist, mit denen sie in entsprechenden Bohrungen, welche sich in den parallel zueinander verlaufenden Wandungselementen des Gehäuses der Schutzvorrichtung befinden, gelagert ist, und wenn die Klappe über eine Nase verfügt, mittels der sie in korrespondierenden Aussparungen der Halbkreise arretierbar ist.

Besonders günstig ist eine Schutzvorrichtung ausgestaltet, wenn die Klappe in ihrer Kontur dem Querschnitt des topfförmigen Gehäuses entspricht und wenn die Klappe über einen Durchbruch verfügt, mit dessen Hilfe sie leicht bedienbar ist, wobei in besonders vorteilhafter Ausgestaltung der Durchbruch von einem Loch gebildet wird, welches von einem Finger einer Bedienungsperson durchgriffen werden kann.

Weiterhin ist eine Schutzvorrichtung von Vorteil, wenn die Klappe im Bereich ihrer imaginären Schwenkachse über eine sichelförmige Ausnehmung verfügt, die einen besseren Zugang zu dem jeweils freien Zapfwellenende ermöglicht.

Weiter ist von Vorteil, wenn die Arretierung der Klappe und deren Entriegelung durch die elastische Verformung des topfförmigen Gehäuses der Schutzvorrichtung ermöglicht wird, was sich leicht realisieren lässt, wenn das topfförmige Gehäuse bevorzugt aus Faser-verstärktem Kunststoff gefertigt ist, und die Klappe aus entsprechend steifem Stahlblech besteht.

Eine besonders günstige Bauform einer Schutzvorrichtung ergibt sich, wenn das topfförmig ausgebildete Gehäuse mit seinem dem Getriebe zugewandten Boden am Gehäuse des Getriebes in geeigneter Weise, am Einfachsten mittels Schrauben, befestigt ist, und wenn das Gehäuse eine umlaufende, von der Stirnseite des Getriebes wegweisende Wandung aufweist, welche in ihrer äußeren Form der Form des Getriebegehäuses angepasst ist.

Eine erfindungsgemäße Schutzvorrichtung ist dann besonders vorteilhaft einsetzbar, wenn das Getriebe Bestandteil einer Pumpe mit zwei Zapfwellenenden ist, wobei die Pumpe Bestandteil einer Gülleausbringvorrichtung sein kann.

Mit Hilfe eines Ausführungsbeispiels wird die Erfindung nachstehend anhand der Zeichnungen noch näher erläutert.

Es zeigt
Figur 1 ein Getriebe mit zwei Zapfwellenenden, stark schematisiert in perspektivischer Ansicht;
Figur 2 einen erfindungsgemäßen Zapfwellenschutz stark schematisiert in perspektivischer Ansicht und
Figur 3 eine schematische Seitenansicht eines Getriebes mit Zapfwellenschutz.

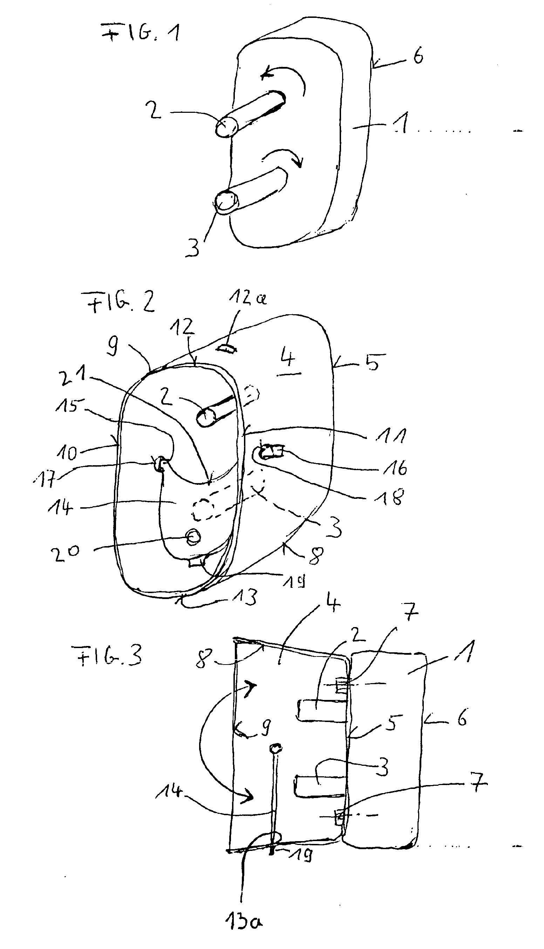

Ein in der Figur 1 schematisch dargestelltes Getriebe 1 weist zwei Zapfwellenenden 2 und 3 auf. Das dargestellte Getriebe 1 kann das Getriebe einer Pumpe mit zwei Antriebswellen sein, die Bestandteil einer Gülleausbringvorrichtung ist. Aber auch ein Getriebe eines anderen Arbeitsgeräts, etwa eines Traktors kann über eine derartige Schutzvorrichtung sicherer gemacht werden.

Die beiden Zapfwellenenden 2 und 3 können sich in unterschiedlichen Richtungen drehen, oder aber auch in unterschiedlichen Geschwindigkeiten und/oder Richtungen. Es versteht sich, dass bei geeigneter konstruktiver Auslegung auch noch weitere Zapfwellenenden vorgesehen sein können. Zum besseren Verständnis wird im Folgenden lediglich immer von zwei Zapfwellenenden 2 und 3 geschrieben.

Eine im Folgenden häufig als Zapfwellenschutz 4 bezeichnete Schutzvorrichtung ist topfförmig ausgebildet und mit seinem dem Getriebe 1 zugewandten Boden 5 am Gehäuse 6 des Getriebes 1 in geeigneter Weise befestigt. Am Einfachsten erfolgt die Befestigung mittels in der Zeichnung nur angedeuteter Schrauben 7, die in Gewindelöcher des Gehäuses 6 eingeschraubt sind, die aber hier nicht näher dargestellt werden müssen.

Das topfförmige Gehäuse 8 des Zapfwellenschutzes 4 weist eine umlaufende, von der Stirnseite des Getriebes 1 wegweisende Wandung 9 auf, welche in ihrer äußeren Form der Form des Getriebegehäuses 6 angepasst ist. Im gezeigten Ausführungsbeispiel ist diese Form im wesentlichen ein Oval mit parallel verlaufenden Wandungselementen 10 und 11, die durch zwei Halbkreise 12 und 13 verbunden werden. Das Gehäuse 8 des Zapfwellenschutzes 4 kann - wie hier auch dargestellt - einen leicht konischen Verlauf haben.

In einer den freien Enden der Zapfwellen 2 und 3 vorgelagerten Ebene befindet sich eine bewegliche Klappe 14, mit zwei bolzenartigen Ansätzen 15 und 16, um welche die Klappe 14 schwenkbar gelagert ist. Die Lagerung erfolgt in entsprechenden Bohrungen 17 und 18, welche sich in den parallel zueinander verlaufenden Wandungselementen 10 und 11 des Gehäuses 8 des Zapfwellenschutzes 4 befinden. Somit ergibt sich für die Klappe 14 eine Schwenkachse, die im wesentlichen senkrecht zu dem Verlauf der Zapfwellenenden 2 und 3 angeordnet ist. Im Bereich der halbkreisförmigen Wandungselemente 12 und 13 befindet sich jeweils eine Aussparung 12a und 13a, in die gegebenenfalls eine Nase 19 der Klappe 14 je nach ihrer Stellung einrasten kann. Die Klappe 14 ist also um ihre bolzenartigen Ansätze 15 und 16 quer zu den Zapfwellenenden 2 und 3 schwenkbar und mit ihrer Nase 19 in den Aussparungen 12a oder 13a arretierbar, so dass sie - je nach ihrer Stellung - einmal das Ende der einen Zapfwelle 2 oder das Ende der anderen Zapfwelle 3 sicher abdeckt. Es ist also immer nur ein Zapfwellenende 2 oder 3 zur Nutzung frei zugänglich, so dass die Sicherheitsvorschriften eingehalten werden.

Wenn das jeweils andere Zapfwellenende 2 oder 3 benutzt werden soll, wird die Klappe 14 einfach - durch Ausrasten der Nase 19 aus ihrer jeweiligen Aussparung 12a oder 13a - entriegelt und in die andere Position geschwenkt, wo sie wieder mit Hilfe ihrer Nase 19 in einer der Aussparungen 13a oder 12a arretiert wird. Die Klappe 14 ist bei normalem Gebrauch praktisch unverlierbar, so dass von einer hohen Lebens- und Nutzugsdauer ausgegangen werden kann. Die Handhabung erfolgt am einfachsten, wenn in der Klappe 14 ein Loch 20 vorgesehen ist, durch welches eine Bedienungsperson mit ihrem Finger hindurch greifen kann, um die Arretierung der Klappe 14 zu entriegeln, und um sie in die andere Position zu schwenken.

Wenn die Zapfwellenenden 2 und 3 einen entsprechend geringen Achsabstand haben, ist es vorteilhaft, wenn die Klappe 14 im Bereich ihrer imaginären Schwenkachse eine sichelförmige Ausnehmung 21 aufweist, damit das anzuschließende Aggregat an der Klappe 14 vorbei am jeweiligen Zapfwellenende 2 oder 3 angeschlossen werden kann.

Das topfförmige Gehäuse 8 kann jeden beliebigen Querschnitt aufweisen und ist bevorzugt aus Faser-verstärktem Kunststoff gefertigt, wobei die Klappe 14 aus entsprechend steifem Stahlblech besteht. Selbstverständlich sind auch andere Werkstoffe zum Bau des Zapfwellenschutzes 4 geeignet.

### Bezugszeichenliste

- 1: Getriebe
- 2: Zapfwelle
- 3: Zapfwelle
- 4: Zapfwellenschutz (Schutzvorrichtung)
- 5: Boden
- 6: Gehäuse des Getriebes
- 7: Schrauben
- 8: Gehäuse der Schutzvorrichtung (Zapfwellenschutz)
- 9: Wandung
- 10: Wandungselement
- 11: Wandungselement
- 12: Halbkreis
- 12a: Aussparung
- 13: Halbkreis
- 13a: Aussparung
- 14: Klappe
- 15: bolzenartiger Ansatz
- 16: bolzenartiger Ansatz
- 17: Bohrung
- 18: Bohrung
- 19: Nase
- 20: Fingerloch
- 21: sichelförmige Ausnehmung

## Patentansprüche

1. Schutzvorrichtung für frei zugängliche Wellenenden, insbesondere Schutzvorrichtung für mehrere, wahlweise anschließbare Zapfwellen eines Getriebes, **dadurch gekennzeichnet, dass** die Schutzvorrichtung (4) durch ein topfförmiges Gehäuse (8) gebildet wird, welches die freien Enden der Zapfwellen (2, 3) seitlich umschließt, und das am Gehäuse (6) des Getriebes (1) montiert ist, wobei in einer den Enden der Zapfwellen (2, 3) vorgelagerten Ebene eine zwischen zwei Endstellungen schwenkbare Klappe (14) im Gehäuse (8) der Schutzvorrichtung (4) derart gelagert ist, dass jeweils in einer Endstellung der Klappe (14) nur das Ende einer Zapfwelle (2 oder 3) freigegeben ist.

2. Schutzvorrichtung nach Anspruch 1, **dadurch gekennzeichnet, dass** das topfförmige Gehäuse (8) durch zwei parallel zueinander verlaufende Wandungselemente (10, 11) gebildet wird, die durch zwei Halbkreise (12, 13) miteinander verbunden sind, wodurch ein im wesentlichen ovaler Querschnitt des Gehäuses (8)gebildet wird.

3. Schutzvorrichtung nach einem der vorstehenden Ansprüche, **dadurch gekennzeichnet, dass** die Klappe (14) zwei bolzenartige Ansätze (15, 16) aufweist, mit denen sie in entsprechenden Bohrungen (17, 18), welche sich in den parallel zueinander verlaufenden Wandungselementen (10, 11) des Gehäuses (8) der Schutzvorrichtung (4) befinden, gelagert ist.

4. Schutzvorrichtung nach einem der vorstehenden Ansprüche, **dadurch gekennzeichnet, dass** die Klappe (14) über eine Nase (19) verfügt, mittels der sie in korrespondierenden Aussparungen (12a, 13a) der Halbkreise (12, 13) arretierbar ist.

5. Schutzvorrichtung nach einem der vorstehenden Ansprüche, **dadurch gekennzeichnet, dass** die Klappe (14) in ihrer Kontur dem Querschnitt des topfförmigen Gehäuses (8) entspricht.

6. Schutzvorrichtung nach einem der vorstehenden Ansprüche, **dadurch gekennzeichnet, dass** die Klappe (14) über einen Durchbruch (20) verfügt, mit dessen Hilfe sie leicht bedienbar ist.

7. Schutzvorrichtung nach einem der vorstehenden Ansprüche, **dadurch gekennzeichnet, dass** der Durchbruch (20) von einem Loch gebildet wird, welches von einem Finger einer Bedienungsperson durchgriffen werden kann.

8. Schutzvorrichtung nach einem der vorstehenden Ansprüche, **dadurch gekennzeichnet, dass** die Klappe (14) im Bereich ihrer imaginären Schwenkachse über eine sichelförmige Ausnehmung (21) verfügt, die einen besseren Zugang zu dem jeweils freien Zapfwellenende (2 oder 3) ermöglicht.

9. Schutzvorrichtung nach einem der vorstehenden Ansprüche, **dadurch gekennzeichnet, dass** die Arretierung der Klappe (14) und deren Entriegelung durch die elastische Verformung des topfförmigen Gehäuses (8) der Schutzvorrichtung (4) ermöglicht wird.

10. Schutzvorrichtung nach einem der vorstehenden Ansprüche, **dadurch gekennzeichnet, dass** das topfförmige Gehäuse (8) bevorzugt aus Faser-verstärktem Kunststoff gefertigt ist und die Klappe (14) aus entsprechend steifem Stahlblech besteht.

11. Schutzvorrichtung nach einem der vorstehenden Ansprüche, **dadurch gekennzeichnet, dass** das topfförmig ausgebildete Gehäuse (8) mit seinem dem Getriebe (1) zugewandten Boden (5) am Gehäuse (6) des Getriebes (1) in geeigneter Weise, am Einfachsten mittels Schrauben (7), befestigt.

12. Schutzvorrichtung nach einem der vorstehenden Ansprüche, **dadurch gekennzeichnet, dass** das topfförmige Gehäuse (8) der Schutzvorrichtung (4) eine umlaufende, von der Stirnseite des Getriebes (1) wegweisende Wandung (9) aufweist, welche in ihrer äußeren Form der Form des Getriebegehäuses (6) angepasst ist.

13. Schutzvorrichtung nach einem der vorstehenden Ansprüche, **dadurch gekennzeichnet, dass** das Getriebe (1) Bestandteil einer Pumpe mit zwei Zapfwellenenden (2, 3) ist.

14. Schutzvorrichtung nach einem der vorstehenden Ansprüche, **dadurch gekennzeichnet, dass** das die Pumpe Bestandteil einer Gülleausbringvorrichtung ist.
